(19) Europäisches Patentamt

European Patent Office

Office européen des brevets

(11) **EP 2 386 838 A1**

(12) **EUROPEAN PATENT APPLICATION**

(43) Date of publication:
**16.11.2011 Bulletin 2011/46**

(51) Int Cl.:
*G01F 25/00* (2006.01)   *G01F 1/84* (2006.01)

(21) Application number: **11164701.2**

(22) Date of filing: **04.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.05.2010 JP 2010110732**

(71) Applicant: **Yokogawa Electric Corporation
Tokyo 180-8750 (JP)**

(72) Inventors:
• **Miyaji, Nobuo**
  **Tokyo (JP)**
• **Kadoguchi, Akimichi**
  **Tokyo (JP)**
• **Yoshino, Akinori**
  **Tokyo (JP)**

(74) Representative: **Henkel, Breuer & Partner
Patentanwälte
Maximiliansplatz 21
80333 München (DE)**

(54) **Coriolis flow meter**

(57)      A Coriolis flow meter (1) that measures a flow rate of a fluid flowing through a vibrating tube (20) based on a Coriolis force acting on the vibrating tube, the Coriolis flow meter may include a driving unit that applies a driving force to vibrate the vibrating tube, a change ratio obtaining apparatus (100) that obtains a change ratio of a vibration of the vibrating tube, which has been given the driving force, a calculating unit (92) that calculates a spring constant and a damping coefficient of the vibrating tube as parameters independent of each other, based on the change ratio obtained by the change ratio obtaining apparatus and on the driving force, and a diagnosing unit (93) that diagnoses a state of the vibrating tube based on the parameters, which has been calculated by the calculating unit.

FIG. 1

EP 2 386 838 A1

**Description**

BACKGROUND OF THE INVENTION

Field of the Invention

The present invention relates to a Coriolis flow meter that measures a flow rate of a fluid flowing through a vibrating tube, which is vibrated by applying a driving force from a driving unit, on the basis of Coriolis force acting on the vibrating tube.

Priority is claimed on Japanese Patent Application No. 2010-110732, filed May 13, 2010, the content of which is incorporated herein by reference.

Description of the Related Art

All patents, patent applications, patent publications, scientific articles, and the like, which will hereinafter be cited or identified in the present application, will hereby be incorporated by reference in their entirety in order to describe more fully the state of the art to which the present invention pertains.

Coriolis flow meters are known as one type of flow meter used in plants. The Coriolis flow meters vibrate a U-shaped tube through which a fluid flows by means of excitation of a coil, and measure Coriolis force, which is generated by the fluid flowing through an interior of the U-shaped tube, on the basis of torsion of the U-shaped tube. Since the Coriolis force increases in proportion to the flow rate of the fluid, the flow rate can be measured through a width or phase of the torsion of the U-shaped tube.

In the Coriolis flow meters, the flow rate is measured using the torsion of the U-shaped tube. As such, if the U-shaped tube undergoes, for instance, corrosion, an error in measurement of the flow rate occurs. Further, in view of maintenance of the U-shaped tube, it is desirable to check the corrosion of the U-shaped tube.

Published Japanese Translation No. 2009-509163 of the PCT International Publication discloses a method using a change in a spring constant K as an index of the corrosion of the U-shaped tube. In this example, when measuring the spring constant K, vibration is attenuated by interrupting an exciting current driving the Coriolis U-shaped tube. This attenuation characteristic is expressed as $\xi\omega$. Here, $\xi$ is an attenuation constant, and $\omega$ is an angular frequency. $\xi\omega$ is determined by measuring an attenuation curve using $Q=1/2\xi$. The spring constant K is calculated by $K=QD\omega$. Here, D is a mechanical attenuation coefficient, which is proportional to a gain G of an amplifier. Further, $\omega$ is expressed by $\omega=2\pi F$, and is obtained from a frequency F of vibration. In this method, it is possible to obtain the spring constant K of the U-shaped tube independently of flow velocity and density of a fluid.

However, when the spring constant is calculated by the aforementioned method, $\xi$ is irregularly changed if a few bubbles are mixed into the fluid, thereby easily giving rise to a great error. Q is typically about 5000, and the attenuation ratio $\xi\omega$ is determined by a structure of the U-shaped tube, so that it cannot be changed. As such, if an attempt is made to obtain the attenuation ratio within a short time, an attenuation width may become small, and an error may become large. On the other hand, if an attempt is made to prolong the attenuating time to improve the precision for calculating the spring constant K, a region where an amplitude approaches zero should be calculated, and the calculation result may be influenced by noise.

Further, it is impossible to determine whether or not deposits are attached to the interior of the U-shaped tube only on the basis of the spring constant of the U-shaped tube.

SUMMARY

A Coriolis flow meter that measures a flow rate of a fluid flowing through a vibrating tube based on a Coriolis force acting on the vibrating tube, the Coriolis flow meter may include a driving unit that applies a driving force to vibrate the vibrating tube, a change ratio obtaining apparatus that obtains a change ratio of a vibration of the vibrating tube, which has been given the driving force, a calculating unit that calculates a spring constant and a damping coefficient of the vibrating tube as parameters independent of each other, based on the change ratio obtained by the change ratio obtaining apparatus and on the driving force, and a diagnosing unit that diagnoses a state of the vibrating tube based on the parameters, which has been calculated by the calculating unit.

A Coriolis flow meter may include a Coriolis sensor unit configured to detect a vibration of a vibrating tube, the Coriolis sensor unit outputting a first output signal, a current amplifier configured to supply a driving current for maintaining the vibration of the vibrating tube to the Coriolis sensor unit, an amplifier configured to amplify the first output signal of the Coriolis sensor unit, the amplifier outputting a second output signal, a smoothing circuit configured to extract an amplitude of the second output signal of the amplifier, the smoothing circuit outputting a third output signal, a control amplifier configured to amplify a difference between the third output signal of the smoothing circuit and a target voltage, the control amplifier outputting a fourth output signal, a voltage setting unit configured to output a fixed gain setting voltage, a switch configured to select a signal of the fourth output signal of the control amplifier and the fixed gain setting voltage output from the voltage setting unit, a multiplier configured to multiply the second output signal of the amplifier and the signal selected by the switch, and a calculation control unit that is connected to the voltage setting unit and the switch, the calculation control unit controlling the voltage setting unit and the switch.

A flow rate measurement method may include applying a driving force to vibrate a vibrating tube, obtaining a change ratio of a vibration of the vibrating tube, which has been given the driving force, calculating a spring constant and a damping coefficient of the vibrating tube as parameters independent of each other, based on the change ratio, and diagnosing a state of the vibrating tube based on the parameters.

BRIEF DESCRIPTION OF THE DRAWINGS

The above features and advantages of the present invention will be more apparent from the following description of certain preferred embodiments taken in conjunction with the accompanying drawings, in which:

FIG 1 is a view illustrating a Coriolis flow meter in accordance with the first preferred embodiment of the present invention;

FIG 2A is a view illustrating the output signal of the Coriolis sensor unit, which is the output signal of the amplifier of the Coriolis flow meter in accordance with the first preferred embodiment of the present invention, in the event of normal operation;

FIG. 2B is a view illustrating the output signal of the Coriolis sensor unit when the vibration of the U-shaped tube is attenuated;

FIG 2C is a view illustrating the output signal of the Coriolis sensor unit when the vibration of the U-shaped tube grows;

FIG 3 is a flow chart illustrating an operation of the calculation control unit of the Coriolis flow meter in accordance with the first preferred embodiment of the present invention, in the event of the diagnosis operation;

FIG 4A is a view illustrating a change in the change ratio $\alpha$ of the integrated value of the squared value of the output of the Coriolis sensor unit of the Coriolis flow meter in accordance with the first preferred embodiment of the present invention;

FIG 4B is a view illustrating a change in the output of the Coriolis sensor unit of the Coriolis flow meter in accordance with the first preferred embodiment of the present invention;

FIG. 4C is a view illustrating a change in the output of the Coriolis sensor unit of the Coriolis flow meter in accordance with a second preferred embodiment of the present invention;

FIG. 5A is a view illustrating a process of step S5 of FIG. 3;

FIG. 5B is a view illustrating a process of step S5 of FIG 3;

FIG. 6A shows a method of finding a spring constant by calculating a change ratio that is an attenuation ratio while attenuating a sine wave while providing a proper oscillation feedback current gain; and

FIG 6B shows a method of finding a spring constant by calculating a change ratio that is an attenuation ratio while attenuating a sine wave while providing a proper oscillation feedback current gain.

DETAILED DESCRIPTION OF THE PREFERRED EMBODIMENTS

The present invention will be now described herein with reference to illustrative embodiments. Those skilled in the art will recognize that many alternative embodiments can be accomplished using the teaching of the present invention and that the present invention is not limited to the embodiments illustrated herein for explanatory purposes.

A Coriolis flow meter that measures a flow rate of a fluid flowing through a vibrating tube based on a Coriolis force acting on the vibrating tube, the Coriolis flow meter may include a driving unit that applies a driving force to vibrate the vibrating tube, a change ratio obtaining apparatus that obtains a change ratio of a vibration of the vibrating tube, which has been given the driving force, a calculating unit that calculates a spring constant and a damping coefficient of the vibrating tube as parameters independent of each other, based on the change ratio obtained by the change ratio obtaining apparatus and on the driving force, and a diagnosing unit that diagnoses a state of the vibrating tube based on the parameters, which has been calculated by the calculating unit.

The change ratio obtaining apparatus may obtain the change ratio by vibrating the vibrating tube with an amplitude by which the flow rate can be detected.

The change ratio obtaining apparatus may obtain the change ratio of the vibration of the vibrating tube when the driving unit applies the driving force continuously at a constant rate.

The change ratio obtaining apparatus may include a sensor that detects the Coriolis force to obtain the change ratio.

The diagnosing unit may diagnose a corrosion state of the vibrating tube based on the spring constant which has been calculated by the calculating unit.

The diagnosing unit may diagnose a state of a deposit on the vibrating tube based on the damping coefficient which has been calculated by the calculating unit.

The change ratio obtaining apparatus may obtain the change ratio of the vibration of the vibrating tube in each of a plurality of unit times to calculate an average of the change ratios.

The change ratio obtaining apparatus may obtain, as the change ratio, variations over time in amplitude of the vibration of the vibrating tube by sampling displacements of the vibrating tube plural times.

A Coriolis flow meter may include a Coriolis sensor unit configured to detect a vibration of a vibrating tube, the Coriolis sensor unit outputting a first output signal, a current amplifier configured to supply a driving current for maintaining the vibration of the vibrating tube to the Coriolis sensor unit, an amplifier configured to amplify the first output signal of the Coriolis sensor unit, the amplifier outputting a second output signal, a smoothing circuit configured to extract an amplitude of the second output signal of the amplifier, the smoothing circuit outputting a third output signal, a control amplifier configured to amplify a difference between the third output signal of the smoothing circuit and a target voltage, the control amplifier outputting a fourth output signal, a voltage setting unit configured to output a fixed gain setting voltage, a switch configured to select a signal of the fourth output signal of the control amplifier and the fixed gain setting voltage output from the voltage setting unit, a multiplier configured to multiply the second output signal of the amplifier and the signal selected by the switch, and a calculation control unit that is connected to the voltage setting unit and the switch, the calculation control unit controlling the voltage setting unit and the switch.

The Coriolis sensor unit may include a driving unit configured to apply a driving force to vibrate the vibrating tube, and a sensor configured to detect a Coriolis force to obtain a change ratio of a vibration of the vibrating tube, which has been given the driving force.

The amplifier may obtain the change ratio of the vibration of the vibrating tube. The calculation control unit may include a calculating unit configured to calculate a spring constant and a damping coefficient of the vibrating tube as parameters independent of each other, based on the change ratio obtained by the amplifier and on the driving force, and a diagnosing unit configured to diagnose a state of the vibrating tube based on the parameters.

The diagnosing unit may diagnose a corrosion state of the vibrating tube based on the spring constant. The diagnosing unit may diagnose a state of a deposit on the vibrating tube based on the damping coefficient.

A flow rate measurement method may include applying a driving force to vibrate a vibrating tube, obtaining a change ratio of a vibration of the vibrating tube, which has been given the driving force, calculating a spring constant and a damping coefficient of the vibrating tube as parameters independent of each other, based on the change ratio, and diagnosing a state of the vibrating tube based on the parameters.

The change ratio may be obtained by vibrating the vibrating tube with an amplitude by which the flow rate can be detected.

The change ratio of the vibration of the vibrating tube may be obtained when the driving force is applied continuously at a constant rate.

The flow rate measurement method may further include detecting a Coriolis force to obtain the change ratio of the vibration of the vibrating tube.

The flow rate measurement method may further include diagnosing a corrosion state of the vibrating tube based on the spring constant which has been calculated.

The flow rate measurement method may further include diagnosing a state of a deposit on the vibrating tube based on the damping coefficient which has been calculated.

The flow rate measurement method may further include obtaining the change ratio of the vibration of the vibrating tube in each of a plurality of unit times to calculate an average of the change ratios.

The change ratio may be variations over time in amplitude of the vibration of the vibrating tube, the change ratio being obtained by sampling displacements of the vibrating tube plural times.

According to the Coriolis flow meter in accordance with the present invention, since a spring constant and a damping coefficient of a vibrating tube are calculated as parameters independent of each other on the basis of a change ratio obtained by a change ratio obtaining apparatus as well as the motion equation of the vibrating tube, it is possible to accurately diagnose the state of the vibrating tube.

A Coriolis flow meter in accordance with a first preferred embodiment of the present invention will be described.

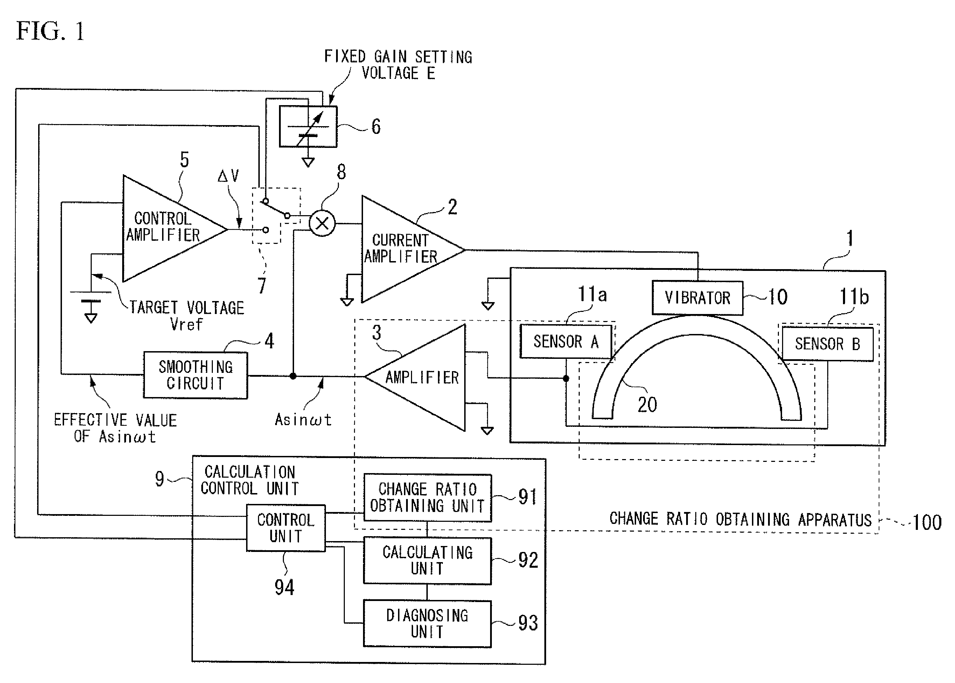

FIG 1 is a view illustrating the Coriolis flow meter in accordance with the first preferred embodiment of the present invention.

As shown in FIG. 1, the Coriolis flow meter in accordance with the first preferred embodiment of the present invention includes a Coriolis sensor unit 1, a current amplifier 2, an amplifier 3, a smoothing circuit 4, a control amplifier 5, a voltage setting unit 6, a switch 7, a multiplier 8, and a calculation control unit 9. The Coriolis sensor unit 1 detects vibration of a U-shaped tube 20. The current amplifier 2 supplies a driving current for maintaining the vibration of the U-shaped tube 20 to the Coriolis sensor unit 1. The amplifier 3 amplifies an output signal of the Coriolis sensor unit 1. The smoothing circuit 4 extracts the amplitude of an output signal of the amplifier 3. The control amplifier 5 amplifies a difference between an output signal of the smoothing circuit 4 and a target voltage Vref. The voltage setting unit 6 outputs a fixed gain setting voltage E. The switch 7 selects one of an output signal ΔV of the control amplifier 5 and the fixed gain setting voltage E that is an output value of the voltage setting unit 6. The multiplier 8 multiplies the output signal of the amplifier 3 and the signal selected by the switch 7 which is hereinafter referred to as "oscillation feedback current gain G".

The current amplifier 2 amplifies an output signal of the multiplier 8, and outputs the driving current to the Coriolis sensor unit 1. Further, the output signal of the amplifier 3 is used as a signal for detecting Coriolis force. The Coriolis force is either an amplitude or a phase of torsion of the U-shaped tube.

The Coriolis sensor unit 1 includes the U-shaped tube 20, a vibrator 10, a sensor A 11a and a sensor B 11b. The vibrator 10 corresponds to a driving unit. The vibrator 10 vibrates the U-shaped tube 20 with the driving current from the current amplifier 2. The sensor A 11a and the sensor B 11b receive the vibration of the U-shaped tube 20, and output a voltage obtained by the vibration of the U-shaped tube 20 to the amplifier 3. The Coriolis flow meter in accordance with the first preferred embodiment of the present invention may diagnose a state of a vibrating tube that is the U-shaped tube 20 by using only a single sensor. Hereinafter, only an output from the sensor A 11 a is assumed to be used. Further, even when the sensor B 11b is used, a diagnosis effect similar to the case where the sensor A 11a is used can be obtained.

The calculation control unit 9 includes a change ratio obtaining unit 91, a calculating unit 92, a diagnosing unit 93, and a control unit 94. The voltage setting unit 6 and the switch 7 are connected to the control unit 94 of the calculation control unit 9, and are controlled by the control unit 94 of the calculation control unit 9. Further, the calculation control unit 9 performs calculation and processes required to diagnose the U-shaped tube 20. Both the calculation and the processes required to diagnose the U-shaped tube 20 will be described below.

The sensor A 11a, the sensor B 11b, the amplifier 3, and the change ration obtaining unit 91 configures a change ratio obtaining apparatus 100.

Next, operation of the Coriolis flow meter in accordance with the first preferred embodiment of the present invention will be described.

In the event of normal operation, the output signal ΔV of the control amplifier 5 is selected by the switch 7. In this case, the output signal ΔV of the control amplifier 5 varies in response to the output signal, specifically an amplitude of the output signal, of the smoothing circuit 4. A circuit loop operates so as to match the output signal of the smoothing circuit 4 with the target voltage Vref. At this time, the oscillation feedback current gain G is called an oscillation feedback current gain G0. This circuit loop oscillates with a constant amplitude in a steady state, and the U-shaped tube vibrates with a constant amplitude. In this state, the torsion of the U-shaped tube is detected to measure the flow rate.

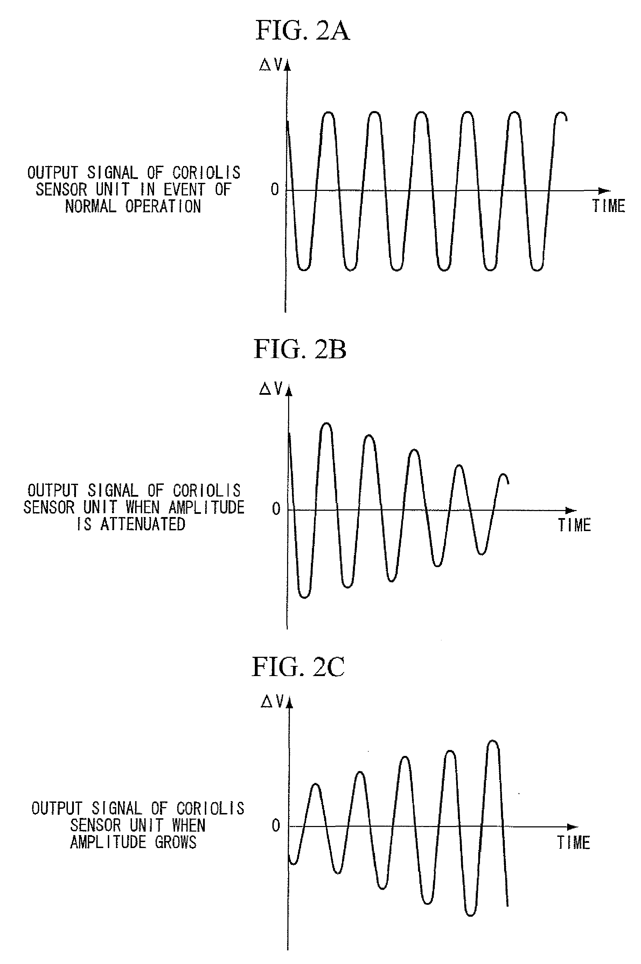

FIG 2A is a view illustrating the output signal of the Coriolis sensor unit 1, which is the output signal of the amplifier 3, in the event of normal operation. As shown in FIG. 2A, the output signal of the Coriolis sensor unit 1 shows an approximately constant amplitude in response to the amplitude of the U-shaped tube.

Meanwhile, in the event of diagnosis operation, the fixed gain setting voltage E is selected by the switch 7. Further, the fixed gain setting voltage E is set to a predetermined fixed value such that the vibration of the U-shaped tube is attenuated or grows. FIG. 2B is a view illustrating the output signal of the Coriolis sensor unit 1 when the vibration of the U-shaped tube is attenuated. FIG 2C is a view illustrating the output signal of the Coriolis sensor unit 1 when the vibration of the U-shaped tube grows.

In the Coriolis flow meter in accordance with the first preferred embodiment of the present invention, the oscillation feedback current gain G is sequentially switched to G1 and G2, thereby a growth ratio and an attenuation ratio of the amplitude are obtained by growing and attenuating the vibration of the U-shaped tube. Finally, a spring constant K and a damping coefficient D that is an attenuation coefficient are calculated. Hereinafter, a principle of calculating the spring constant K, the damping coefficient D, etc. will be described.

First, a vibration equation of the U-shaped tube is expressed by Equation (1).

$$M\frac{d^2x}{dt^2} + D\frac{dx}{dt} + Kx = G\frac{dx}{dt} \quad \cdots\cdots\cdots (1)$$

where x is a displacement of the vibration of the U-shaped tube, M is a mass of the entire U-shape tube, D is the damping coefficient, K is the spring constant of the U-shaped tube, G is an oscillation feedback current gain, and is an angular frequency.

The term "$G\dfrac{dx}{dt}$" of the right side of Equation (1) corresponds to a force based on a driving current supplied from the current amplifier 2 to the Coriolis sensor unit 1, wherein G is defined by the output signal ΔV of the control amplifier 5 and the fixed gain setting voltage E.

The opposite sides of Equation (1) are divided by M, thereby obtaining Equation (2).

$$\frac{d^2x}{dt^2} + \frac{D}{M}\frac{dx}{dt} + \frac{K}{M}x = \frac{G}{M}\frac{dx}{dt} \quad \cdots\cdots\cdots (2)$$

By substituting D/M=2ξω and $\omega = \sqrt{\dfrac{K}{M}}$, Equation (3) is obtained.

$$\frac{d^2x}{dt^2} + 2\zeta\omega\frac{dx}{dt} + \omega^2 x = \frac{G}{M}\frac{dx}{dt} \quad \cdots\cdots\cdots (3)$$

By transformation, Equation (4) is obtained.

$$\frac{d^2x}{dt^2} + (2\zeta\omega - \frac{G}{M})\frac{dx}{dt} + \omega^2 x = 0 \quad \cdots\cdots\cdots (4)$$

By transformation, Equation (5) is obtained.

$$x = A\exp(-\zeta\omega + \frac{G}{2M})t \times \sin(\omega t) \quad \cdots\cdots\cdots (5)$$

In this manner, the displacement x of the vibration of the U-shaped tube has a waveform of an attenuating/ growing sine wave. Further, the output signal of the Coriolis sensor unit 1, which is proportional to the displacement x of the vibration of the U-shaped tube, has a waveform of an attenuating/growing sine wave as well.

A change ratio of an integrated value of a squared value of an output of the Coriolis sensor unit when the oscillation feedback current gain G is G1 is $\alpha$1 wherein G1>GO and $\alpha$1>1. A change ratio of an integrated value of a squared value of an output of the Coriolis sensor unit when the oscillation feedback current gain G is G2 is $\alpha$2 wherein G0>G2 and $\alpha$2 <1. $\alpha$1 and $\alpha$2 are set by Equations (6) and (7), respectively.

$$\alpha 1 = (-2\zeta\omega + \frac{G1}{M}) \times \Delta t \quad \cdots\cdots\cdots (6)$$

$$\alpha 2 = (-2\zeta\omega + \frac{G2}{M}) \times \Delta t \quad \cdots\cdots\cdots (7)$$

By Equations (6) and (7), M is given as in Equation (8).

$$M = \frac{G1 - G2}{\alpha 1 - \alpha 2} \quad \cdots\cdots\cdots (8)$$

Further, when the change ratio > 1, this indicates the growth of amplitude. When the change ratio < 1, this indicates the attenuation of amplitude.

By the aforementioned sequence, it is possible to calculate the spring constant K and the damping coefficient D from Equations (9) and (10).

$$K = M \times \omega^2 \quad \cdots\cdots\cdots (9)$$

$$D = G1 - \frac{\alpha 1 \times M}{\Delta t} \quad \cdots\cdots\cdots (10)$$

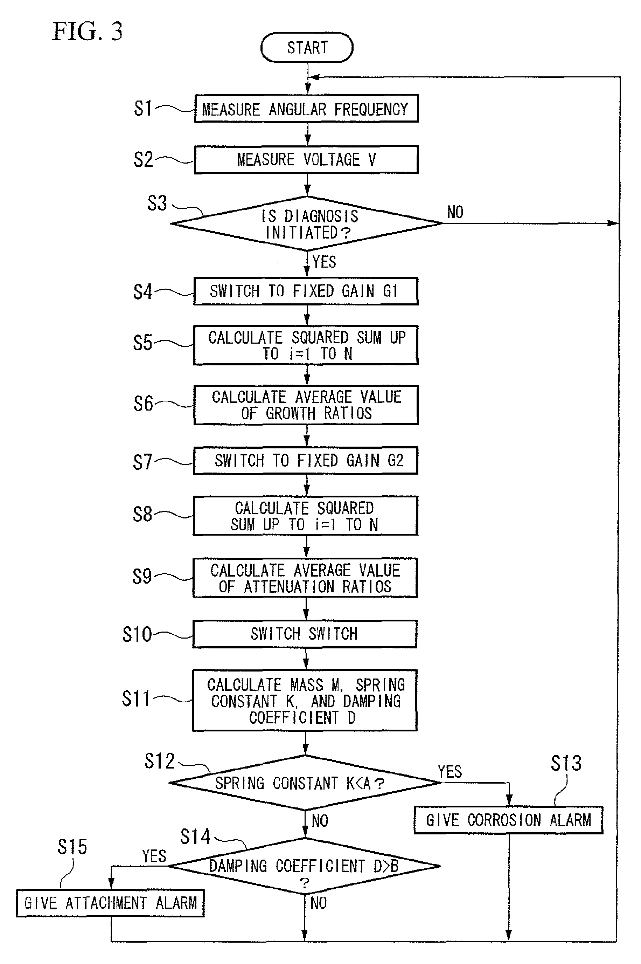

FIG 3 is a flow chart illustrating an operation of the calculation control unit 9 in the event of the diagnosis operation.

In step S 1 of FIG. 3, the angular frequency ω in the event of the normal operation is measured. Each angular frequency ω can be measured on the basis of the output signal "Asin(ωt)" of the amplifier 3, and so on, as illustrated in FIG. 1.

Next, in step S2, the output signal ΔV of the control amplifier 5 is measured. Thereby, it is possible to obtain the oscillation feedback current gain G in the event of the normal operation.

Next, in step S3, it is determined whether or not a diagnosis initiation time t0 has been reached. If the determination is affirmative, the process proceeds to step S4. If the determination is negative, the process returns to step S 1.

In step S4, the switch 7 is switched from the side of selecting the output signal ΔV of the control amplifier 5 to the side of selecting the fixed gain setting voltage E that is the output value of the voltage setting unit 6. Further, the fixed gain setting voltage E of the voltage setting unit 6 is set to a value when the oscillation feedback current gain G becomes G1. Thus, the change ratio α of the integrated value of the squared value of the output of the Coriolis sensor unit is set to α1 wherein α1>1.

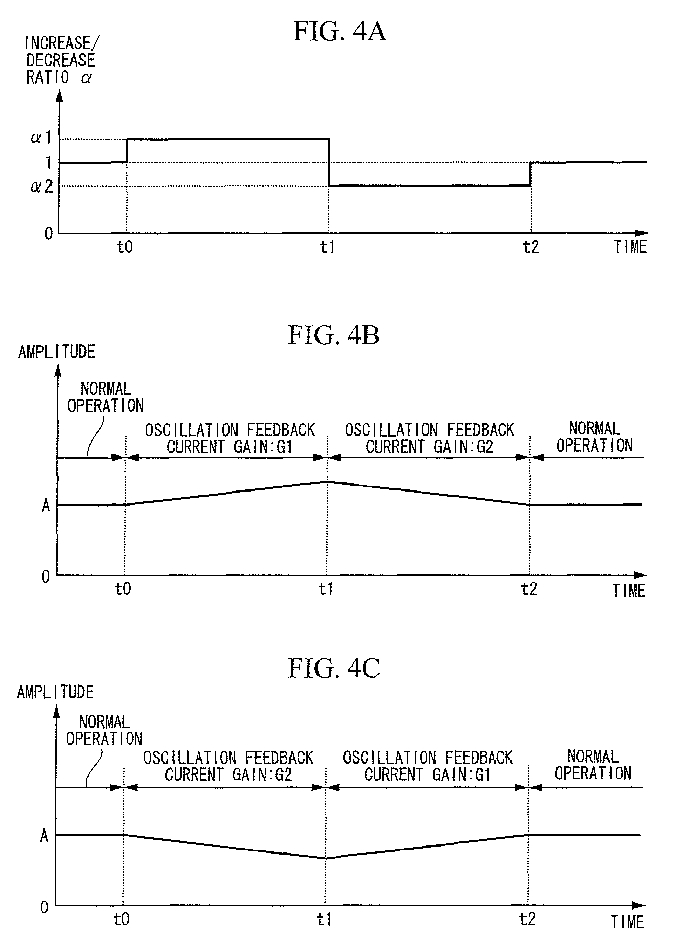

FIG 4A is a view illustrating a change in the change ratio α of the integrated value of the squared value of the output of the Coriolis sensor unit 1 of the Coriolis flow meter in accordance with the first preferred embodiment of the present invention. FIG 4B is a view illustrating a change in the output of the Coriolis sensor unit 1 of the Coriolis flow meter in accordance with the first preferred embodiment of the present invention. As shown in FIG 4A, the change ratio α is switched from 1 to α1 at a time t0 wherein α1>1. Further, as shown in FIG 4B, the amplitude of the output signal "Asin(ωt)" of the amplifier 3, which has maintained an approximately constant value up to that time, begins to increase from the time t0.

Next, in step S5, the change ratio of the amplitude of the sine wave that is a growth ratio is calculated with respect to each time of a period, i=1 to N, until a time t1, i.e. for L seconds. Next, in step S6, an average value of the change ratios calculated in step S5 is calculated.

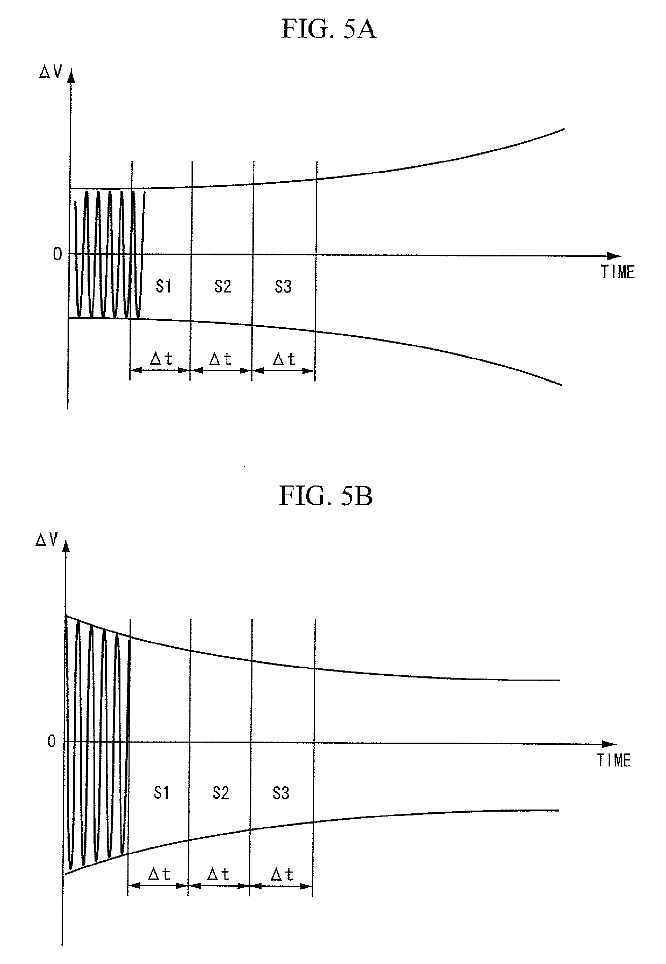

FIGS. 5A and 5B are a view illustrating a process of step S5 of FIG. 3.

As shown in FIGS. 5A and 5B, in step S5, with respect to each time of a period (i-1 to N) equivalent to Δt, a sum Sj of the square of the sine wave: A×exp(-ξωt+G1/2M)t×sin(ωt+∅), is calculated.

$$S_1 = \sum_{i=1}^{1000} \{A \times \exp(-\varsigma\omega t + G1/2M)t \times \sin(\omega t + \phi)\}^2 / N$$
$$S_2 = \sum_{i=1001}^{2000} \{A \times \exp(-\varsigma\omega t + G1/2M)t \times \sin(\omega t + \phi)\}^2 / N \quad \left.\begin{array}{c} \\ \\ \\ \\ \end{array}\right\} \cdots (11)$$
$$\vdots$$

Supposing that a sampling rate of the output of the Coriolis sensor unit is 0.001 seconds for a period of $\Delta t$, i.e. that a sampling number N is 1000, an integral time of Sj is 1 second. If this is repeated L times, the integral time becomes L seconds in all. The change ratio R of an adjacent amplitude is calculated by Equation (12).

$$R = S_j / S_{j-1} = \exp\{(-2\zeta\omega + G1/M) \cdot \Delta t\} \quad \cdots\cdots\cdots (12)$$

This is repeated for j from 1 to L.
In step S6, an average value $R_{AVE}$ of the change ratios calculated L times is calculated. That is,

$$R_{AVE} = \sum_{n=1}^{L} (S_n - S_{n-1})/L \quad \cdots\cdots\cdots (13).$$

Afterwards, the change ratio $\alpha 1$ (>1) is calculated by Equation (14) using the average value RAVE per time.

$$\alpha 1 = \ln(R_{AVE})/\Delta t = -2\zeta\omega + G1/M \quad \cdots\cdots\cdots (14)$$

Next, in step S7 of FIG. 3, at the time t1, the value of the fixed gain setting voltage E of the voltage setting unit 6 is set to a value when the oscillation feedback current gain G becomes G2. Thus, the change ratio $\alpha$ of the integrated value of the squared value of the output of the Coriolis sensor unit is set to $\alpha 2$ wherein $\alpha 2 < 1$. Thereby, as shown in FIGS. 4A and 4B, the change ratio $\alpha$ is switched from $\alpha 1$ to $\alpha 2$ at the time t1 wherein $\alpha 1 > 1$ and $\alpha 2 < 1$. Further, the amplitude of the output signal "Asin($\omega$t)" of the amplifier 3, which has increased up to the time t1, begins to decrease from the time t1.
Next, in step S8, the change ratio of the amplitude of the sine wave that is an attenuation ratio is calculated until a time t2, i.e. for L seconds, with respect to each time of a period, i=1 to N. Next, in step S9, an average value of the change ratios, which is calculated in step S8, is calculated.
The same processes as in steps S6 and S7 are performed in steps S8 and S9, respectively. That is, as shown in FIG. 5B, in step S8, with respect to each time of a period (i=1 to N) equivalent to $\Delta t$, a sum Sj of the square of the sine wave: $A \times \exp(-\xi\omega t + G2/M)t \times \sin(\omega t + \varnothing)$, is calculated. Hereinafter, the same calculation as in steps S5 and S6 is performed, and thereby the change ratio $\alpha 2$ (<1) is calculated by Equation (15).

$$\alpha 2 = \ln(R_{AVE})/\Delta t = -2\zeta\omega + G2/M \quad \cdots\cdots\cdots (15)$$

Next, in step S10, as in FIGS. 4A and 4B, the switch 7 is switched from the side of selecting the fixed gain setting voltage E that is the output value of the voltage setting unit 6 to the side of selecting the output signal $\Delta V$ of the control amplifier 5 at the time t2. Thus, since the switch 7 returns to the normal operation, the change ratio $\alpha$ approaches 1, and the amplitude of the sine wave is adapted to be maintained at an approximately constant value.
Next, in step S 11, the overall mass M, the spring constant K, and the damping coefficient D of the U-shaped tube are calculated.
When $\xi\omega$ is eliminated from Equations (14) and (15), the overall mass M of the U-shaped tube is calculated as in Equation (16).

$$M = \frac{G1 - G2}{\alpha 1 - \alpha 2} \quad \cdots\cdots\cdots (16)$$

The overall mass M is changed by corrosion of the U-shaped tube, and is also dependent on the fluid density in the U-shaped tube. As such, the overall mass M cannot be used as a diagnostic variable. However, the spring constant K and the damping coefficient D, neither of which is dependent on the fluid density or the fluid velocity according to Equations (9) and (10), can be calculated.

Next, in step S12, it is determined whether or not the spring constant K calculated by Equation (9) is smaller than a predetermined value A. If the determination is affirmative, the process proceeds to step S13. If the determination is negative, the process proceeds to step S 14.

In step S 13, an alarm indicating the effect that the corrosion of the U-shaped tube is underway is given, and then the process returns to step S1.

In step S 14, it is determined whether or not the damping coefficient D calculated by Equation (10) is greater than a predetermined value B. If the determination is affirmative, the process proceeds to step S15. If the determination is negative, the process returns to step S 1.

In step S 15, an alarm indicating the effect that deposits are attached to an inner wall of the U-shaped tube is given, and then the process returns to step S1.

Among the aforementioned processes, the processes from step S1 to step S9 correspond to a function as the change ratio obtaining apparatus, the process of step S11 I corresponds to a function as the calculating unit, and the processes from step S12 to step S 15 correspond to a function as the diagnosing unit.

In this way, in the Coriolis flow meter in accordance with the first preferred embodiment of the present invention, the spring constant K and the damping coefficient D are calculated as parameters independent of each other using Equation (1) for the vibration of the U-shaped tube. As such, it is possible to independently diagnose the state of the corrosion of the U-shaped tube or the deposits on the U-shaped tube.

Further, in the Coriolis flow meter in accordance with the first preferred embodiment of the present invention, since the change ratio of the amplitude of the sine wave is obtained while an adequate oscillation feedback current gain is given without interrupting an excitation current, it is possible to control the change ratio so as to have a proper value. As such, it is possible to obtain the parameters required for diagnosis with high precision.

Furthermore, the ratio of change of the squared integrated value of the output of the Coriolis sensor unit is calculated. Thereby, it is possible to easily calculate an average value of increase ratios or decrease ratios of component values of an arbitrary time zone. Further, by setting two gains G1 and G2, it is unnecessary to obtain the value of Q. Further, by setting the gain to zero, it is possible to measure the value of Q as well.

Further, since a difference, $\alpha 1-\alpha 2$, between the increase ratio and the decrease ratio can be calculated, it is possible to suppress an influence of disturbance such as bubbles. Further, since the change ratio can be arbitrarily set, a time required for the diagnosis operation can be reduced. For example, if G1 and G2 are set so as to have a great width of change, the diagnosis is possible within a short time.

Further, in the Coriolis flow meter in accordance with the first preferred embodiment of the present invention, as shown in FIG. 4B, the oscillation feedback current gains G1 and G2 are set to proper values. Thereby, it is possible to suppress the range of amplitude of the U-shaped tube to be within a range where a function as the Coriolis flow meter can be exerted while the change ratio of the amplitude of the sine wave is being obtained. As such, in the event of the diagnosis operation as well, the flow rate can be accurately measured in parallel with the diagnosis, and thus on-line diagnosis is made possible. Further, it takes little time to return to the normal operation.

Further, in the first preferred embodiment of the present invention, the amplitude is adapted to change from an increase to a decrease. FIG 4C is a view illustrating a change in the output of the Coriolis sensor unit of the Coriolis flow meter in accordance with a second preferred embodiment of the present invention. In the second preferred embodiment of the present invention, as shown in FIG 4C, the amplitude may be adapted to change from a decrease to an increase by sequentially switching the oscillation feedback current gain from G2 to G1. Even in this case, by suppressing the range of the amplitude of the U-shaped tube within the range where the function as the Coriolis flow meter can be exerted, it is possible to accurately measure the flow rate in the event of the diagnosis operation as well.

Furthermore, in the Coriolis flow meter in accordance with the first preferred embodiment of the present invention, the change ratios $\alpha 1$ and $\alpha 2$ are calculated on the basis of the average value of the change ratios R calculated L times. As such, it is possible to accurately calculate the change ratio without being influenced by disturbance, and to accurately calculate the spring constant K and the damping coefficient D. For example, when bubbles are generated in the U-shaped tube, corresponding distortion is generated from an actual waveform of the sine wave in response to the generated state of the bubbles. However, the change ratio R is calculated numerous times, and the calculated change ratios R are averaged. Thereby, it is possible to effectively preclude an influence of the distortion of the sine wave resulting from the mixture of the bubbles.

Further, in the first preferred embodiment of the present invention, $\alpha 1$ and $\alpha 2$ are set to be $\alpha 1>1$ and $\alpha 2<1$. However, G1 or G2 may be selected such that $\alpha 1=1$ or $\alpha 2=1$.

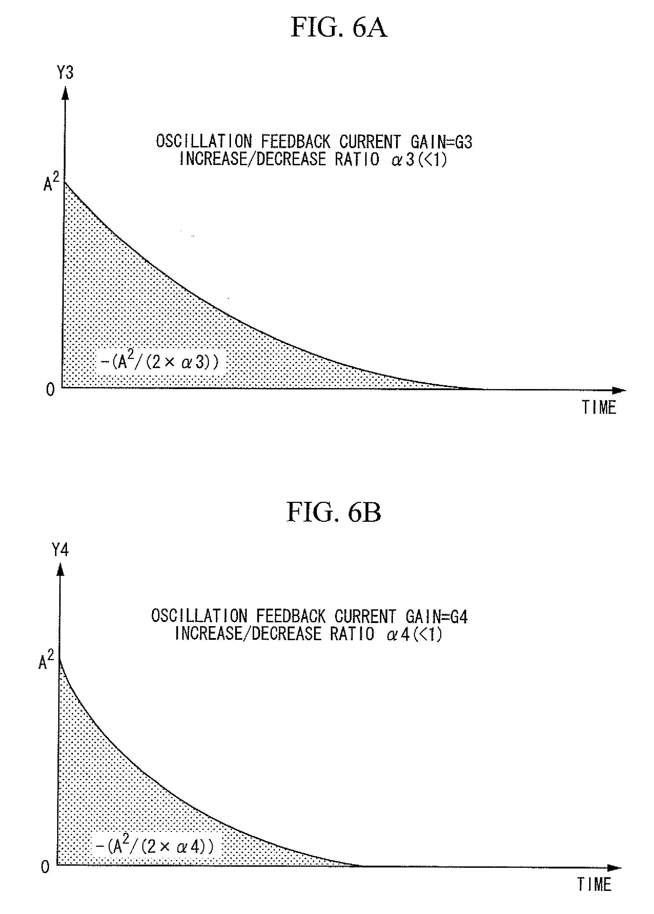

FIGS. 6A and 6B show a method of finding a spring constant by calculating a change ratio that is an attenuation ratio while attenuating a sine wave while providing a proper oscillation feedback current gain.

The squares of sine waves when an oscillation feedback current gain G3 and an oscillation feedback current gain G4 are applied are given by $Y3=A^2 exp(\alpha3 \times t) \times sin^2(\omega t+\emptyset)$ and $Y4=A^2 exp(\alpha4 \times t) \times sin^2(\omega t+\emptyset)$. Here, $\alpha3$ is a change ratio in the oscillation feedback current gain G3 wherein $\alpha3<1$, and $\alpha4$ is a change ratio in the oscillation feedback current gain G4 wherein $\alpha4<1$.

In this case, values of Y3 and Y4 are integrated with respect to time from immediately after switching from the normal operation to the oscillation feedback current gains G3 and G4. At a point where the sine wave is sufficiently attenuated, the integrated values of Y3 and Y4 converge on $-(A^2/(2 \times \alpha a3))$ and $-(A^2/(2 \times \alpha4))$. As such, the attenuation ratios $\alpha3$ and $\alpha4$ can be obtained from reciprocals of the integrated values.

As shown in Equation (5), since $x = Aexp(-\xi\omega + G/2M)t \times sin(\omega t)$, $-2\xi\omega + G3/M = \alpha3$ in the case of the oscillation feedback current gain G3, and $-2\xi\omega + G4/M = \alpha4$ in the case of the oscillation feedback current gain G4. Therefrom, $M=(G3-G4)/(\alpha3-\alpha4)$, $K=M\omega^2$, and $D=G3-\alpha3 \times M$ can be calculated, which are lead from Equations (9) and (10). The amplitude A can be obtained from the effective value of $Asin(\omega t)$, which is the output of the smoothing circuit 4 that is illustrated in FIG 1, in the event of the normal operation.

In this manner, in the method shown in FIGS. 6A and 6B, it is possible to calculate and obtain the attenuation ratio more easily. Meanwhile, since the sine wave is used until a sufficiently attenuating region in calculating the attenuation ratio, there is a drawback in that it is easily affected by an influence of disturbance, compared to the sequence shown in FIG. 3.

As described above, according to the Coriolis flow meter in accordance with the preferred embodiment of the present invention, since the spring constant and the damping coefficient of the vibrating tube are calculated as parameters independent of each other on the basis of the change ratio obtained by the change ratio obtaining apparatus as well as the motion equation of the vibrating tube, it is possible to accurately diagnose the state of the vibrating tube.

The applied scope of the present invention is not limited to the aforementioned preferred embodiments. The present invention may be widely applied to Coriolis flow meters, which measure the flow rate of a content flowing through a vibrating tube, which is vibrated by applying a driving force from the driving unit, on the basis of a Coriolis force acting on the vibrating tube.

As used herein, the following directional terms "forward, rearward, above, downward, right, left, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially," "about," "nearly", and "approximately" as used herein mean a reasonable amount of deviation of the modified term such that the end result is not significantly changed. For example, these terms can be construed as including a deviation of at least $\pm$ 5 percents of the modified term if this deviation would not negate the meaning of the word it modifies.

The term "unit" is used to describe a component, section or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

**Claims**

1. A Coriolis flow meter that measures a flow rate of a fluid flowing through a vibrating tube based on a Coriolis force acting on the vibrating tube, the Coriolis flow meter comprising:

    a driving unit that applies a driving force to vibrate the vibrating tube;
    a change ratio obtaining apparatus that obtains a change ratio of a vibration of the vibrating tube, which has been given the driving force;
    a calculating unit that calculates a spring constant and a damping coefficient of the vibrating tube as parameters independent of each other, based on the change ratio obtained by the change ratio obtaining apparatus and on the driving force; and

a diagnosing unit that diagnoses a state of the vibrating tube based on the parameters, which has been calculated by the calculating unit.

2.  The Coriolis flow meter according to claim 1, wherein the change ratio obtaining apparatus obtains the change ratio by vibrating the vibrating tube with an amplitude by which the flow rate can be detected.

3.  The Coriolis flow meter according to claim 1, wherein the change ratio obtaining apparatus obtains the change ratio of the vibration of the vibrating tube when the driving unit applies the driving force continuously at a constant rate.

4.  The Coriolis flow meter according to claim 1, wherein the change ratio obtaining apparatus includes a sensor that detects the Coriolis force to obtain the change ratio.

5.  The Coriolis flow meter according to claim 1, wherein the diagnosing unit diagnoses a corrosion state of the vibrating tube based on the spring constant which has been calculated by the calculating unit.

6.  The Coriolis flow meter according to claim 1, wherein the diagnosing unit diagnoses a state of a deposit on the vibrating tube based on the damping coefficient which has been calculated by the calculating unit.

7.  The Coriolis flow meter according to claim 1, wherein the change ratio obtaining apparatus obtains the change ratio of the vibration of the vibrating tube in each of a plurality of unit times to calculate an average of the change ratios.

8.  The Coriolis flow meter according to claim 1, wherein the change ratio obtaining apparatus obtains, as the change ratio, variations over time in amplitude of the vibration of the vibrating tube by sampling displacements of the vibrating tube plural times.

9.  A Coriolis flow meter comprising:

    a Coriolis sensor unit configured to detect a vibration of a vibrating tube, the Coriolis sensor unit outputting a first output signal;
    a current amplifier configured to supply a driving current for maintaining the vibration of the vibrating tube to the Coriolis sensor unit;
    an amplifier configured to amplify the first output signal of the Coriolis sensor unit, the amplifier outputting a second output signal;
    a smoothing circuit configured to extract an amplitude of the second output signal of the amplifier, the smoothing circuit outputting a third output signal;
    a control amplifier configured to amplify a difference between the third output signal of the smoothing circuit and a target voltage, the control amplifier outputting a fourth output signal;
    a voltage setting unit configured to output a fixed gain setting voltage;
    a switch configured to select a signal of the fourth output signal of the control amplifier and the fixed gain setting voltage output from the voltage setting unit;
    a multiplier configured to multiply the second output signal of the amplifier and the signal selected by the switch; and
    a calculation control unit that is connected to the voltage setting unit and the switch, the calculation control unit controlling the voltage setting unit and the switch.

10. The Coriolis flow meter according to claim 9, wherein
    the Coriolis sensor unit comprises:

    a driving unit configured to apply a driving force to vibrate the vibrating tube; and
    a sensor configured to detect a Coriolis force to obtain a change ratio of a vibration of the vibrating tube, which has been given the driving force.

11. The Coriolis flow meter according to claim 10, wherein
    the amplifier obtains the change ratio of the vibration of the vibrating tube, and the calculation control unit comprises:

    a calculating unit configured to calculate a spring constant and a damping coefficient of the vibrating tube as parameters independent of each other, based on the change ratio obtained by the amplifier and on the driving force; and

a diagnosing unit configured to diagnose a state of the vibrating tube based on the parameters.

12. The Coriolis flow meter according to claim 11, wherein
the diagnosing unit diagnoses a corrosion state of the vibrating tube based on the spring constant, and
the diagnosing unit diagnoses a state of a deposit on the vibrating tube based on the damping coefficient.

13. A flow rate measurement method comprising:

applying a driving force to vibrate a vibrating tube;
obtaining a change ratio of a vibration of the vibrating tube, which has been given the driving force;
calculating a spring constant and a damping coefficient of the vibrating tube as parameters independent of each other, based on the change ratio; and
diagnosing a state of the vibrating tube based on the parameters.

14. The flow rate measurement method according to claim 13, further comprising:

diagnosing a corrosion state of the vibrating tube based on the spring constant which has been calculated.

15. The flow rate measurement method according to claim 13, further comprising:

diagnosing a state of a deposit on the vibrating tube based on the damping coefficient which has been calculated.

FIG. 1

FIXED GAIN SETTING VOLTAGE E

CONTROL AMPLIFIER 5

ΔV

CURRENT AMPLIFIER 2

TARGET VOLTAGE Vref

VIBRATOR 10

SENSOR A 11a

SENSOR B 11b

AMPLIFIER 3

SMOOTHING CIRCUIT 4

EFFECTIVE VALUE OF Asinωt

Asinωt

20

CALCULATION CONTROL UNIT 9

CHANGE RATIO OBTAINING UNIT 91

CONTROL UNIT 94

CHANGE RATIO OBTAINING APPARATUS 100

CALCULATING UNIT 92

DIAGNOSING UNIT 93

EP 2 386 838 A1

# FIG. 2A

OUTPUT SIGNAL OF CORIOLIS
SENSOR UNIT IN EVENT OF
NORMAL OPERATION

# FIG. 2B

OUTPUT SIGNAL OF CORIOLIS
SENSOR UNIT WHEN AMPLITUDE
IS ATTENUATED

# FIG. 2C

OUTPUT SIGNAL OF CORIOLIS
SENSOR UNIT WHEN
AMPLITUDE GROWS

FIG. 3

START

S1 — MEASURE ANGULAR FREQUENCY

S2 — MEASURE VOLTAGE V

S3 — IS DIAGNOSIS INITIATED? — NO

YES

S4 — SWITCH TO FIXED GAIN G1

S5 — CALCULATE SQUARED SUM UP TO i=1 TO N

S6 — CALCULATE AVERAGE VALUE OF GROWTH RATIOS

S7 — SWITCH TO FIXED GAIN G2

S8 — CALCULATE SQUARED SUM UP TO i=1 TO N

S9 — CALCULATE AVERAGE VALUE OF ATTENUATION RATIOS

S10 — SWITCH SWITCH

S11 — CALCULATE MASS M, SPRING CONSTANT K, AND DAMPING COEFFICIENT D

S12 — SPRING CONSTANT K<A? — YES — S13 — GIVE CORROSION ALARM

NO

S14 — DAMPING COEFFICIENT D>B? — YES — S15 — GIVE ATTACHMENT ALARM

NO

15

## FIG. 4A

INCREASE/
DECREASE
RATIO $\alpha$

$\alpha 1$

1

$\alpha 2$

0          t0                    t1                    t2        TIME

## FIG. 4B

AMPLITUDE

NORMAL
OPERATION

OSCILLATION FEEDBACK          OSCILLATION FEEDBACK          NORMAL
CURRENT GAIN:G1               CURRENT GAIN:G2               OPERATION

A

0          t0                    t1                    t2        TIME

## FIG. 4C

AMPLITUDE

NORMAL
OPERATION

OSCILLATION FEEDBACK          OSCILLATION FEEDBACK          NORMAL
CURRENT GAIN:G2               CURRENT GAIN:G1               OPERATION

A

0          t0                    t1                    t2        TIME

# FIG. 5A

# FIG. 5B

## FIG. 6A

Y3

OSCILLATION FEEDBACK CURRENT GAIN=G3
INCREASE/DECREASE RATIO $\alpha 3 (<1)$

$A^2$

$-(A^2/(2 \times \alpha 3))$

0

TIME

## FIG. 6B

Y4

OSCILLATION FEEDBACK CURRENT GAIN=G4
INCREASE/DECREASE RATIO $\alpha 4 (<1)$

$A^2$

$-(A^2/(2 \times \alpha 4))$

0

TIME

18

Europäisches
Patentamt

European
Patent Office

Office européen
des brevets

**EUROPEAN SEARCH REPORT**

Application Number

EP 11 16 4701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/040468 A1 (MICRO MOTION INC [US]; RENSING MATTHEW JOSEPH [US]; PATTEN ANDREW TIMO) 12 April 2007 (2007-04-12)<br>* page 10, line 28 - page 12, line 5 *<br>* page 17, line 30 - page 18, line 29; figures 1,5 *<br>----- | 1-15 | INV.<br>G01F25/00<br>G01F1/84 |
| A | US 5 009 109 A (KALOTAY PAUL [US] ET AL) 23 April 1991 (1991-04-23)<br>* column 8, line 50 - column 10, line 54; figure 3 *<br>----- | 9-12 | |
| A | US 2007/017274 A1 (WHEELER MATTHEW G [US] ET AL WHEELER MATTHEW GLEN [US] ET AL) 25 January 2007 (2007-01-25)<br>* paragraph [0035] - paragraph [0041]; figure 1 *<br>----- | 1-15 | |
| | | | TECHNICAL FIELDS SEARCHED (IPC) |
| | | | G01F<br>G01N |

The present search report has been drawn up for all claims

| Place of search | Date of completion of the search | Examiner |
|---|---|---|
| The Hague | 25 August 2011 | Mouget, Mathilde |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 16 4701

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2011

| Patent document cited in search report | | Publication date | Patent family member(s) | | Publication date |
|---|---|---|---|---|---|
| WO 2007040468 | A1 | 12-04-2007 | AR | 055637 A1 | 29-08-2007 |
| | | | AU | 2005336982 A1 | 12-04-2007 |
| | | | BR | PI0520555 A2 | 12-05-2009 |
| | | | CA | 2622976 A1 | 12-04-2007 |
| | | | CN | 101268340 A | 17-09-2008 |
| | | | EP | 1949046 A1 | 30-07-2008 |
| | | | EP | 2103913 A2 | 23-09-2009 |
| | | | JP | 2009509163 A | 05-03-2009 |
| | | | US | 2008281535 A1 | 13-11-2008 |
| | | | US | 2011178738 A1 | 21-07-2011 |
| US 5009109 | A | 23-04-1991 | CA | 2070642 A1 | 07-06-1991 |
| | | | DE | 69013929 D1 | 08-12-1994 |
| | | | DE | 69013929 T2 | 08-06-1995 |
| | | | EP | 0504224 A1 | 23-09-1992 |
| | | | JP | 7026862 B | 29-03-1995 |
| | | | JP | 4506410 T | 05-11-1992 |
| | | | WO | 9108447 A1 | 13-06-1991 |
| US 2007017274 | A1 | 25-01-2007 | AR | 046136 A1 | 23-11-2005 |
| | | | AT | 354075 T | 15-03-2007 |
| | | | AU | 2003286596 A1 | 08-06-2005 |
| | | | BR | 0318552 A | 10-10-2006 |
| | | | CA | 2543262 A1 | 02-06-2005 |
| | | | CN | 1860350 A | 08-11-2006 |
| | | | DE | 60311897 T2 | 28-06-2007 |
| | | | DK | 1687595 T3 | 07-05-2007 |
| | | | EP | 1687595 A1 | 09-08-2006 |
| | | | HK | 1098531 A1 | 21-08-2009 |
| | | | JP | 4469337 B2 | 26-05-2010 |
| | | | JP | 2007521469 A | 02-08-2007 |
| | | | MX | PA06004343 A | 06-07-2006 |
| | | | WO | 2005050145 A1 | 02-06-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010110732 A
- JP 2009509163 PCT